# EUROPÄISCHE PATENTSCHRIFT

(11) **EP 0 711 692 B1**
(45) Veröffentlichungstag und Bekanntmachung des Hinweises auf die Patenterteilung: **09.06.1999**
(21) Anmeldenummer: 95116323.7
(22) Anmeldetag: 17.10.1995
(51) Int. Cl.: B60T 1/087

(54) **Antriebseinheit mit einer Brennkraftmaschine und einem hydrodynamischen Retarder**
Drive unit with an internal combustion engine and a hydrodynamic retarder
Unité d'entraînement avec un moteur à combustion interne et un ralentisseur hydrodynamique

(30) Priorität: 10.11.1994 DE 4440164
(43) Veröffentlichungstag der Anmeldung: 15.05.1996
(73) Patentinhaber: Voith Turbo Beteiligungs GmbH, 89522 Heidenheim (DE)
(72) Erfinder: Edelmann, Peter, D-89522 Heidenheim (DE); Friedrich, Jürgen, D-74564 Crailsheim (DE); Gebhardt, Hans, D-90759 Langenzenn (DE); Möller, Heribert, D-91623 Sachsen (DE); Neitz, Alfred, D-90530 Wendelstein (DE); Vogelsang, Klaus, D-74564 Crailsheim (DE)
(74) Vertreter: Dr. Weitzel & Partner

(56) Entgegenhaltungen:
- DE-B- 1 805 329
- DE-C- 3 301 560
- DE-C- 3 713 580
- US-A- 3 650 358
- US-A- 3 720 372

## Beschreibung

Die Erfindung betrifft eine Antriebseinheit, insbesondere für ein Kraftfahrzeug, gemäß dem Oberbegriff von Anspruch 1.

Eine solche Antriebseinheit ist aus DE 37 13 580 C1 bekanntgeworden (Dokument 1).

Retarder werden bei schweren Fahrzeugen vor allem eingesetzt, um die insbesondere bei Bremsung aus hoher Fahrgeschwindigkeit (Anpassungsbremsung) anfallende kinetische Bremsenergie aufzunehmen und in Wärme umzusetzen, aber auch für geforderte Dauerbremsleistungen sind Retarder gut geeignet, beispielsweise bei einer konstanten Geschwindigkeit von 30 km/h und bei einem Gefälle von 7 %. Als Betriebsflüssigkeit dient in der Regel Öl. Die im Retarder an die Betriebsflüssigkeit übergegangene Wärme muß mittels eines speziellen Wärmetauschers dem Kühlmittel oder der Umgebungsluft zugeführt werden.

Der aus der US-PS 3 720 372 (Dokument 2) bekannte Retarder ist mit dem Antriebsmotor integriert, dauernd mit der Kurbelwelle verbunden und stets vom Kühlmittel der Kühleinrichtung durchströmt. Dabei dient der Rotor des Retarders als Umwälzpumpe anstelle einer gesonderten Kühlmittelpumpe. Der Zweck dieser Einrichtung besteht darin, mittels des Retarders das Kühlmittel aufzuheizen, um den Fahrgast-Innenraum zu erwärmen. Diesem Zweck dient auch eine am Retarder angeordnete Steuereinrichtung, die lediglich die Verteilung des Kühlmittels in Abhängigkeit von dessen Temperatur in einer Bypaß-Leitung durch den Kühler leitet.

Aus der DE-PS 33 01 560 (Dokument 3) ist ferner ein Retarder bekannt, der über eine schaltbare Kupplung mit der Kurbelwelle des Antriebsmotors und den Treibrädern des Fahrzeuges verbunden ist. Die Aufgabe des Retarders ist jedoch nicht die Aufnahme und Umsetzung hoher kinetischer Bremsenergie des Fahrzeuges in Wärme. Der Retarder wird ausschließlich als Heizgerät betrieben, wobei die Heizleistung unter Berücksichtigung einer zur Verfügung stehenden Antriebsleistung gesteuert werden soll. Das Kühlmittel des Motors ist gleichzeitig die Betriebsflüssigkeit des Retarders.

Ein aus der DE-AS 1 946 167 (US-PS 3 650 358) bekannter Retarder wird von der Kurbelwelle einer Verbrennungskraftmaschine angetrieben, deren Kühlmittel auch als Betriebsflüssigkeit für den Retarder dient. Der Vorteil dieser Betriebsweise liegt darin, daß die anfallende Wärme unmittelbar in dem dem Kühler zugeleiteten Kühlmittel entwickelt wird und ein Wärmetauscher zwischen zwei Flüssigkeiten entbehrlich ist. Die Lagerung des Rotors erfolgt mit einem Wälzlager und die Abdichtung zwischen Gestell und Rotorwelle ist mit zwei Lippendichtungen ausgeführt.

Bei Antriebseinheiten dieser Gattung ist man bestrebt, die axiale Baulänge sowie das Gewicht so gering wie möglich zu halten, besonders dann, wenn die Antriebseinheit für ein Kraftfahrzeug bestimmt ist. Dies wurde bei den bisher bekannten Antriebseinheiten nicht in wünschenswertem Maße erreicht.

Der Erfindung liegt die Aufgabe zugrunde, eine Antriebseinheit gemäß dem Oberbegriff von Anspruch 1 derart zu gestalten, daß die axiale Baulänge sowie das Gewicht geringer sind als bei den bekannten Antriebseinheiten.

Diese Aufgabe wird durch die Merkmale von Anspruch 1 gelöst. Hierdurch wird im einzelnen folgendes erreicht:
* Durch die fliegende Lagerung des Rotors des Retarders entfällt ein besonderes Lager (oder gar zwei besondere Lager) für den Rotor des Retarders. Hierdurch verringert sich die axiale Baulänge.
* Auch bei einer vorgegebenen Brennkraftmaschine läßt sich der Raum zwischen Lüfter und Kurbelgehäuse auf der Frontseite der Brennkraftmaschine durch Anordnung des Retarders ausnutzen, ohne daß das Kurbelgehäuse und der Lüfter wesentlich verändert werden müssen.
* Normalerweise ist mit dem Rotor des Retarders ein Schwingungsdämpfer fest verbunden. Durch Anwendung der Erfindung läßt sich dieser in seinem Umfang reduzieren, auch in axialer Richtung. Bei günstigen Verhältnissen braucht man ihn bei Anwendung der Erfindung überhaupt nicht.

Die Erfindung ist anhand der Zeichnung näher erläutert. Darin ist im einzelnen folgendes dargestellt:
Figur 1 zeigt eine Antriebseinheit in einer Seitenansicht, und zwar teilweise in einem Axialschnitt gemäß der Schnittebene A-A in Figur 2.
Figur 2 zeigt dieselbe Antriebseinheit in einer Draufsicht in Richtung auf die Motorwelle bei abgenommenen Lüfterrad; der Flugkreis des Lüfterrades ist strichpunktiert angedeutet.
Figur 3 ist eine vergrößerte Schnittansicht gemäß der Schnittebene B-B in Figur 2.
Figur 4 ist eine vergrößerte Schnittansicht gemäß der Schnittebene D-D in Figur 2.
Figur 5 zeigt in einer Ansicht analog Figur 2 einen Zwischenkörper zwischen Kurbelgehäuse und Retarder.
Die Figuren 6-9 zeigen Ausschnitte aus Figur 1 zur Erläuterung von Einzelheiten.

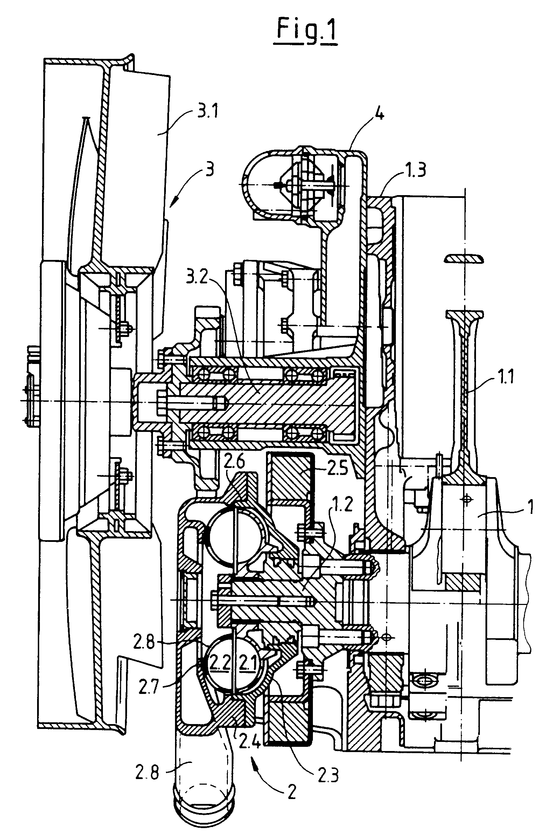

In Figur 1 sind vom Motor lediglich einige wenige Teile dargestellt, u.a. die Kurbelwelle 1, eine Pleuelstange 1.1 sowie ein stirnseitig an der Kurbelwelle 1 angeschraubter Wellenzapfen 1.2 sowie ein Kurbelgehäuse 1.3.

In Figur 1 links von Kurbelgehäuse 1.3 befindet sich ein Retarder 2, ferner ein Lüfter 3.

Der Retarder 2 weist ein Rotorschaufelrad 2.1 und ein Statorschaufelrad 2.2 auf. Das Rotorschaufelrad ist auf dem Wellenzapfen 1.2 fliegend gelagert. Der Retarder weist ein Gehäuse auf, das aus einem das Rotorschaufelrad umgebenden Glocke 2.3 aufgebaut ist, ferner aus einem Deckelkörper 2.4. Der Wellenzapfen 1.2 trägt ferner eine Dämpfungseinrichtung 2.5, die mit dem Wellenzapfen 1.2 drehfest verbunden ist.

Der Lüfter 3 ist von der Kurbelwelle 1 des Motors angetrieben, und zwar über einen hier nur teilweise dargestellten Getrieberädersatz. Wie man sieht, verläuft die Lüfterwelle 3.2 parallel zum Wellenzapfen 1.2.

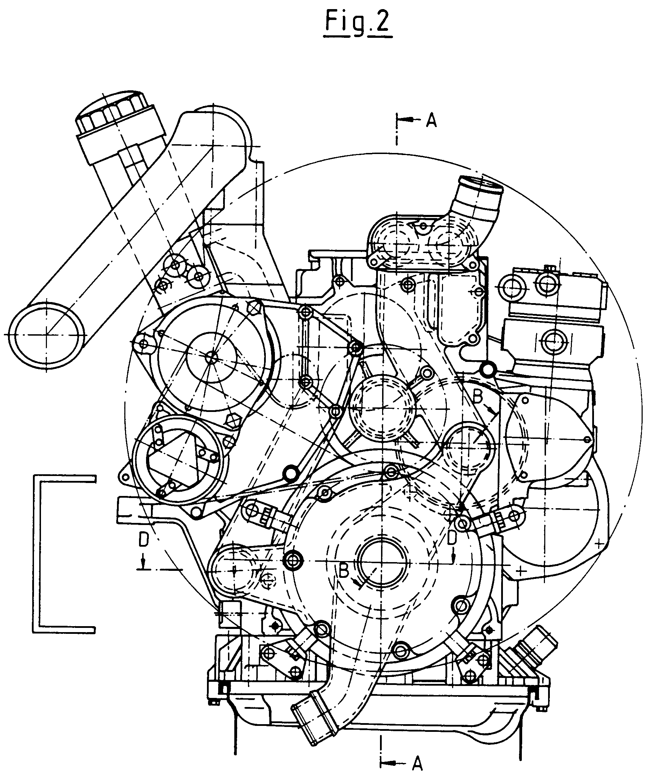

Die Anordnung ist derart getroffen, daß der Retarder 2 praktisch den gesamten Raum ausfüllt, der begrenzt wird durch die dem Retarder zugewandte Stirnfläche des Kurbelgehäuses 1.3 bzw. durch den Getrieberädersatz, der den Lüfter 3 antreibt, ferner durch die Lüfterwelle 3.2 und schließlich durch die Hinterkante des Lüfterrades 3.1. Dabei befindet sich Retarder 2 mit dem Deckelkörper 2.4 in

der Draufsicht gemäß Figur 2 innerhalb des Flugkreises des Lüfterrades 3.1. Somit wird der Raum in optimaler Weise ausgenutzt.

Ein ganz entscheidender Vorteil dieser Anordnung von Retarder 2 in dem genannten Raum zwischen Kurbelgehäuse 1.3, Lüfterwelle 3.2 und Lüfterrad 3.1 besteht in folgendem: Der vom Lüfterrad 3.1 erzeugte Luftstrom führt aufgrund der räumlichen Nähe zwischen Lüfterrad 3.1 und Retarder 2 von dessen Außenflächen Wärme ab, die beim Bremsbetrieb entsteht. Der dem Retarder zugeordnete Wärmetauscher wird somit deutlich entlastet.

Da Retarder 2 unmittelbar vor dem Motor sitzt (Kaltseite der Motorkühlung), kann man die Wassermasse, die sich zwischen Retardereingang und Kühler befindet, ferner die Motor-Schmierölmasse sowie anteilig die Metallmasse des Kühlsystems einschließlich des Motors zur kapazitiven Energieaufnahme nutzen. Dadurch hat der Retarder eine größere Kapazität. Die Bremsleistung kann kurzfristig mehr Energie erzeugen, als der Kühler dauerhaft übertragen kann.

Durch die kompakte Anordnung gemäß der Erfindung sind die notwendigen Rohrleitungen auf eine minimale Länge reduziert. Damit sind auch die Probleme minimiert, die sich bei konventionellen Antriebseinheiten aufgrund der verhältnismäßig langen Wege der Rohrleitungen ergeben.

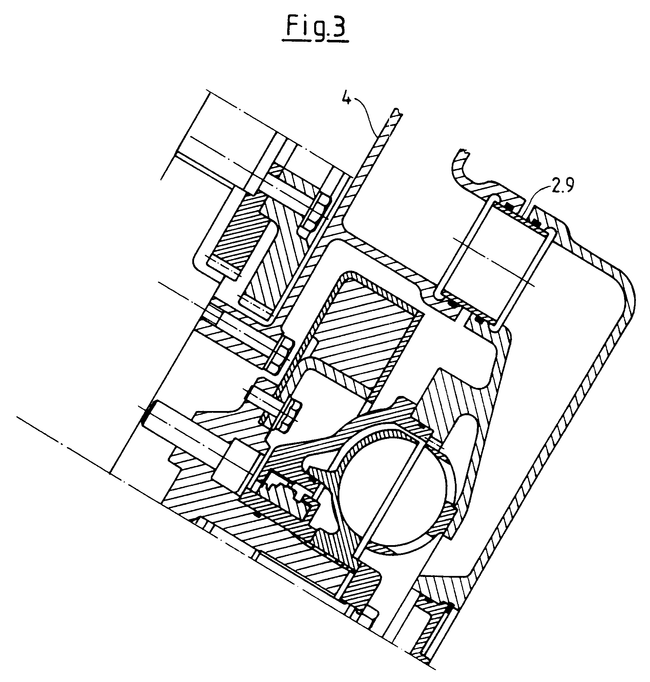

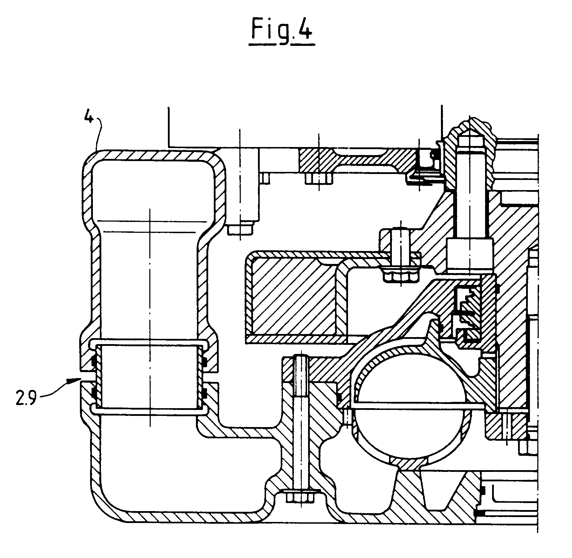

Der genannte Deckelkörper 2.4 hat mehrere Funktionen:
* Er bildet einen Teil des Retardergehäuses, indem er das Statorschaufelrad 2.2 umschließt.
* Als Hohlkörper bildet er eine Sammelkammer mit drei Anschlußstutzen, nämlich zwei Zuläufen und einem Ablauf für das Medium, das aufgrund der Konzeption dieser Antriebseinheit gleichzeitig Kühlmedium und Arbeitsmedium ist (sogenannter Wasserpumpenretarder); der eine der drei Anschlüsse, nämlich Anschlußstutzen 2.8, der Kühlwasser vom Fahrzeugkühler heranführt, ist in Figur 1 dargestellt, und die beiden anderen Anschlüsse 2.9 in den Figuren 3 und 4.
* Der Deckelkörper 2.4 stützt sich am Kurbelgehäuse 1.3 oder anderweitig an der festen Umgebung ab und bildet damit eine Drehmomentenstütze.
* Der Deckelkörper 2.4 ist durch Aufstecken auf das Rotorgehäuse 2.3 mit diesem verbunden - siehe die zylindrische Paßfläche 2.6. Er trägt somit das Rotorgehäuse 2.3. Außerdem dient er für dieses Rotorgehäuse 2.3 als Zentrierorgan, womit er gleichzeitig die Gleitringdichtung zwischen Rotorgehäuse 2.3 und Wellenzapfen 1.2 zentriert.
* Der Deckelkörper trägt das Statorschaufelrad 2.2; er ist auch mit diesem durch eine Steckverbindung verbunden und stützt sich auf den Paßflächen 2.7 ab.
* Der Deckelkörper 2.4 steht mit dem Arbeitsraum des Retarders 2 über Durchbrechungen 2.8 in der Rückwand des Statorschaufelrades 2.2 in leitender Verbindung, so daß ein Flüssigkeitsaustausch zwischen dem Arbeitsraum des Retarders einerseits und dem Innenraum des Deckelkörpers 2.4 stattfinden kann.

Die Vorteile, die sich aus dieser Anordnung ergeben, sind vielfältig. Vor allem tragen die Gestaltung und Anordnung des Deckelkörpers zur Kompaktheit der Bauweise bei. Die gesamte Antriebseinheit ist wartungsfreundlich, weil nämlich durch Abnehmen des Lüfterrades 3.1 und ggf. des Deckelkörpers 2.4 ein freier Zugang zu allen entscheidenden Teilen gegeben ist.

Wenn auch im dargestellten Ausführungsbeispiel ein besonderer Wellenzapfen 1.2 vorgesehen ist, so ist es natürlich auch möglich, einen solchen Wellenzapfen der Kurbelwelle 1 anzuformen, so daß Wellenzapfen 1.2 und Kurbelwelle 1 ein einziges Bauteil bilden.

Die Figuren 3 und 4 lassen nochmals die entscheidenden Bauteile erkennen, soweit sich diese auf den Aufbau des Retarders beziehen. Insbesondere erkennt man hieraus, daß der Deckelkörper 2.4 mittels Steckverbindungen an die entsprechenden Rohrleitungsanschlüsse angeschlossen ist.

Statorschaufelrad 2.2 und Deckelkörper 2.4 können einteilig ausgebildet sein, also aus einem einzigen Stück bestehen.

Wie sich aus dem vorstehenden ergibt, ist der Rotor 2.1 des Retarders 2 vorzugsweise fliegend gelagert; er ist somit vom Kurbelwellenlager getragen.

In besonders geschickter Weise haben die Erfinder einen Zwischenkörper 4 vorgesehen. Dieser befindet sich zwischen Kurbelgehäuse 1.3 und Lüfter 3. Er ist am Kurbelgehäuse 1.3 gelagert und schließt sich unmittelbar an den Deckelkörper 2.4 an. Er trägt eine Vielzahl von Elementen. Auf jeden Fall trägt er den kompletten Lüfter 3 samt dessen Welle 3.2 mit Laufrad 3.1. Er zentriert außerdem das Gehäuse 2.3 und 2.4 des Retarders 2. Ferner kann er weitere Aggregate tragen, wie beispielsweise Thermostate.

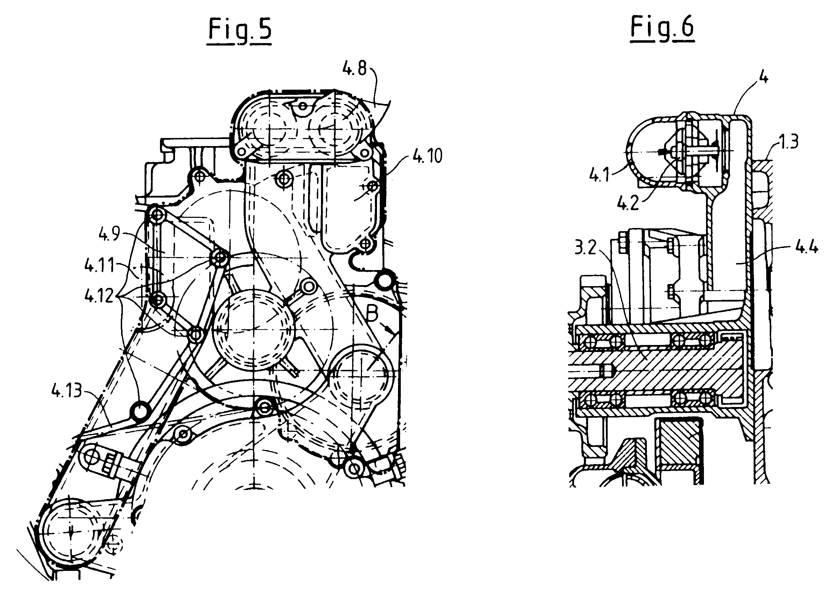

Die Umrisse des Zwischenkörpers erkennt man aus Figur 5 - dort in starken Linien strichpunktiert angedeutet. Man erkennt daraus im einzelnen die Eintrittsöffnung 4.9 für die Kühlflüssigkeit zum Motor, ferner die Austrittsöffnung 4.10 aus dem Kurbelgehäuse. Weiterhin erkennt man eine Spannrolle 4.11 für den Keilriemen der Hilfsmaschinen. Ferner sind Anlenkpunkte 4.12 für einen Tragbock 4.13 für Hilfsaggregate zu erkennen. Rechts oben in Figur 5 befindet sich ein Auslaßstutzen 4.8 für Kühlflüssigkeit, die zum Fahrzeugkühler strömt.

Figur 6 zeigt das Umfeld im Bereich der Lüfterwelle 3.2. Man erkennt im einzelnen wieder den Zwischenkörper 4, das Kurbelgehäuse 1.3, ein Thermostatgehäuse 4.1 sowie den Thermostaten 4.2, außerdem einen Kanal 4.4 als Kurzschlußverbindung für Flüssigkeit zum Retarder 2.

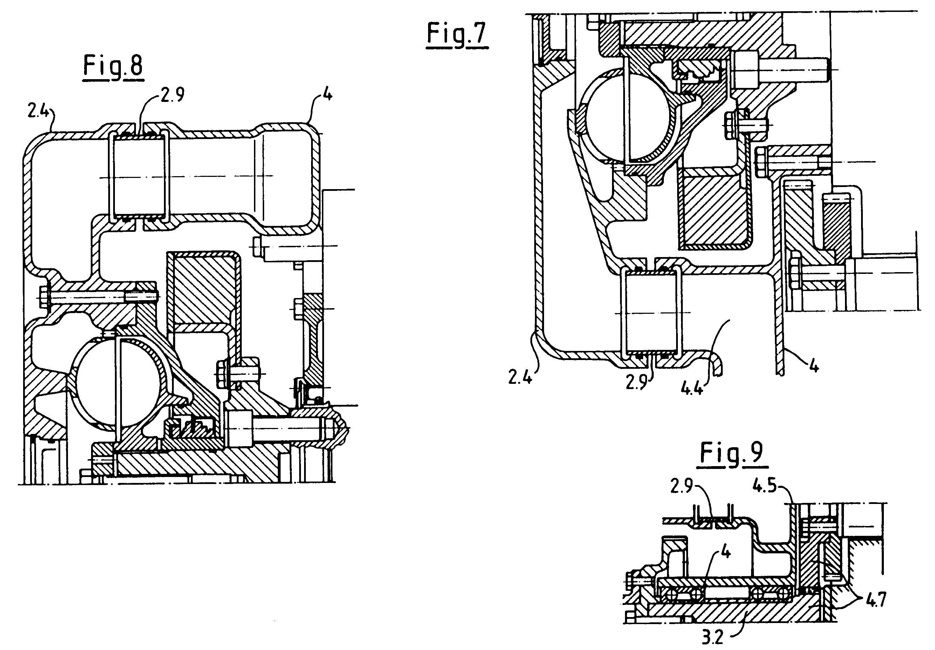

Bei der Darstellung in Figur 7 ist die Schnittebene unter einem anderen Winkel als bei der Darstellung von Figur 6 gelegt. Man erkennt wiederum den genannten Kanal 4.4, den Deckelkörper 2.4 sowie eine Steckverbindung 2.9.

Bei der Darstellung gemäß Figur 8 ist ebenfalls der Schnitt in einer anderen Ebene als bei Figur 6 gelegt. Dasselbe gilt für Figur 9. Aus Figur 9 erkennt man u.a. ein Gehäuseteil 4.5 als Rädertriebabschluß, ferner die Antriebszahnräder 4.7 zum Antrieb des Lüfters 3, die Lüfterwelle 3.2 sowie die Steckverbindung 2.9.

## Patentansprüche

1. Antriebseinheit, insbesondere für ein Kraftfahrzeug mit den folgenden Merkmalen:
1.1 mit einem Verbrennungsmotor;
1.2 mit einem hydrodynamischen Retarder (2), der einen Stator, einen Rotor sowie ein Gehäuse aufweist;
1.3 mit einem dem Motor zugeordneten Kühlsystem, das einen Lüfter aufweist;
1.4 der Retarder dient beim bremsfreien Betrieb sowie beim Bremsbetrieb zum Umwälzen der Kühlflüssigkeit;
gekennzeichnet durch die folgenden Merkmale:
1.5 das Retardergehäuse ist aus einem den Rotor (2.1) umschließenden Teil oder Glocke sowie aus einem den Stator (2.2) umschließenden Teil oder Deckelkörper (2.4) aufgebaut;
1.6 der Deckelkörper (2.4) ist als Hohlkörper ausgebildet, der drei Anschlüsse für die Kühl- und Arbeitsflüssigkeit aufweist, nämlich zwei Zuläufe und einen Ablauf, und steht außerdem mit dem Arbeitsraum des Retarders (2) in leitender Verbindung.

2. Antriebseinheit nach Anspruch 1, dadurch gekennzeichnet, daß der Deckelkörper (2.4) und die Glocke (2.3) über eine zylindrische Paßfläche (2.6) miteinander zusammenfügbar sind.

3. Antriebseinheit nach Anspruch 1 oder 2, dadurch gekennzeichnet, daß der Deckelkörper (2) mit einem Lüftertragelement (4) durch Steckverbindungen (2.9) zusammenfügbar ist.

4. Antriebseinheit nach einem der Ansprüche 1 bis 3, dadurch gekennzeichnet, daß der Deckelkörper (2.4) die Statorschaufeln (2.2) trägt.

5. Antriebseinheit nach Anspruch 4, dadurch gekennzeichnet, daß Deckelkörper (2.4) und Stator (2.2) durch Steckverbindungen zusammengefügt sind.

6. Antriebseinheit nach einem der Ansprüche 1 bis 4 dadurch gekennzeichnet, daß der Deckelkörper (2.4) und der Stator (2.2) ein einziges Teil miteinander bilden.

7. Antriebseinheit nach einem der Ansprüche 1 bis 6, dadurch gekennzeichnet, daß der Deckelkörper (2.4) Kühlrippen aufweist.

## Claims

1. Drive unit, in particular for a motor vehicle, comprising the following features:
1.1 with a combustion engine;
1.2 with a hydro-dynamic retarder (2) having a stator, a rotor as well as a housing;
1.3 with a cooling system which is associated with the motor and which has a ventilator;
1.4 the retarder serves to circulate the cooling liquid during brake-free operation and during braking operation;
**characterised by** the following features:
1.5 The retarder housing is composed of an element or dome which encases the rotor (2.1) as well as an element or cover part (2.4) which encases the stator (2.2);
1.6 the cover part (2.4) is in the form of a hollow element having three connections for the cooling and operating liquid, i.e. two nets and one outlet, and it is also conductingly joined to the work area of the retarder (2).

2. Drive unit according to Claim 1, **characterised in that** the cover part (2.4) and the dome (2.3) can be joined via a cylindrical fitting surface (2.6).

3. Drive unit according to Claim 1 or 2, **characterised in that** the cover part (2) can be joined to a ventilator support element (4) by way of plug connections (2.9).

4. Drive unit according to one of Claims 1 to 3, **characterised in that** the cover part (2.4) supports the stator blades (2.2).

5. Drive unit according to Claim 4, **characterised in that** the cover part (2.4) and the stator (2.2) are joined together via plug connections.

6. Drive unit according to one of Claims 1 to 4, **characterised in that** the cover parts (2.4) and the stator (2.2) form one single part.

7. Drive unit according to one of Claims 1 to 6, **characterised in that** the cover body (2.4) comprises cooling webs.

## Revendications

1. Unité de transmission, en particulier pour un véhicule automobile, présentant les caractéristiques suivantes:
1.1 avec un moteur à combustion interne;
1.2 avec un ralentisseur hydrodynamique (2), présentant un stator, un rotor et un carter;
1.3 avec un système de refroidissement affecté au moteur, présentant un ventilateur;
1.4 le ralentisseur sert à assurer la circulation du fluide réfrigérant lors de la marche sans freinage ainsi que pendant le freinage
caractérisée par les caractéristiques suivantes:
1.5 le carter du ralentisseur est constitué d'un élément ou d'une cloche entourant le rotor (2.1) ainsi que d'un élément ou corps de couvercle (2.4) entourant le stator (2.2);
1.6 le corps de couvercle (2.4) est conformé sous forme de corps creux, présentant 3 raccords pour le liquide réfrigérant et le liquide de travail, à savoir deux entrées et une sortie, et se trouve en correspondance conductrice avec la zone de travail du ralentisseur (2).

2. Unité de transmission selon la revendication 1, caractérisée en ce que le corps de couvercle (2.4) et la cloche (2.3) peuvent être assemblés au moyen d'une surface d'ajustage cylindrique (2.6).

3. Unité de transmission selon la revendication 1 ou 2, caractérisée en ce que le corps de couvercle (2) peut être assemblé avec un élément supportant le ventilateur (4) au moyen de liaisons enboîtables (2.9).

4. Unité de transmission selon l'une des revendications 1 à 3, caractérisée en ce que le corps de couvercle (2.4) porte les aubages du stator (2.2).

5. Unité de transmission selon la revendication 4, caractérisée en ce que le corps de couvercle (2.4) et le stator (2.2) sont assemblés au moyen de liaisons emboîtables.

6. Unité de transmission selon l'une des revendications 1 à 4, caractérisée en ce que le corps de couvercle (2.4) et le stator forment ensemble un seul élément.

7. Unité de transmission selon l'une des revendications 1 à 6, caractérisée en ce que le corps de couvercle (2.4) présente des ailettes de refroidissement.
